# EUROPEAN PATENT APPLICATION

(11) **EP 3 173 962 A1**
(43) Date of publication of application: **31.05.2017**
(21) Application number: 15306866.3
(22) Date of filing: 25.11.2015
(51) Int. Cl.: G06F 21/14, G06F 9/455

(54) **METHOD TO GENERATE A SECURE CODE**

(71) Applicant: GEMALTO SA, 92190 Meudon (FR)
(72) Inventor: GARREAU, Eric, 13881 GEMENOS CEDEX (FR)
(74) Representative: Scheer, Luc

(57) **Abstract**

The present invention relates to a method to generate a code (SC) to be stored in a memory in order to be later executed by a microprocessor, comprising the steps of generating initial operation codes (opcodes) in abstract assembly language (AA), interpreting each abstract assembly opcode (O) using at least two different virtual machine engines (VM1, VM2) logics, producing disjoined sequences (S1, S2) of target assembly opcodes, each sequence (S1, S2) implementing the corresponding virtual machine logic needed to interpret one assembly opcode (O), randomly choosing one of the at least two sequences (S1, S2) of target assembly opcodes for each initial opcode (O), merging extremities of chosen sequences of target assembly opcodes in compliance with opcode boundaries within each interpreted target assembly opcode and with data flow, storing the resulting code (SC) for subsequent execution.

## Description

### FIELD OF THE INVENTION

The present invention relates to a method to generate a code to be stored in a memory in order to be later executed by a microprocessor.

The invention also pertains to a code as obtained by applying said method and to a computer readable media storing such a code for it to be executed by a microprocessor.

### BACKGROUND OF THE INVENTION

Today, most vendors are proposing Software Development Kits which allow to apply various obfuscation methods to an input code. These methods are efficient against existing tools like disassemblers which can help attackers to reverse the application execution logic. Indeed obfuscation methods enable binary formats to be invalid, symbols to be mangled, garbage code to be inserted etc...

Other approaches imply a specific Virtual Machine engine where static data become executable code only at runtime. In such solutions, the original code is converted into a specific assembly for which no reverse tools exists, defeating or at least slowing attackers' attempts.

Anyway, whether the protection comes from an indirect virtual machine or a direct "garbage" code, there is a definitive method for breaking it: capturing the execution assembly trace and then crunching it back to a static "simpler" code. It allows to analyze it in order to identify basic macro-blocs patterns, and at last to produce a clear-text disassembly out of them.

Even with ultimate Virtual Machines which decrypt opcodes just before they are executed, the original application algorithm must be executed due to functional needs and thus it will be revealed by the real execution trace.

The tools allowing to capture an assembly trace and to crunch it back to an exploitable code are not widely available and thus vendors estimate that their SDKs are sufficient. However, the always progressing development of attack tools reveals the necessity to produce secure codes able to resist to such attacks.

Further alternative and advantageous solutions would, accordingly, be desirable in the art.

### SUMMARY OF THE INVENTION

The present invention aims at avoiding, or at least making more difficult the above-mentioned malicious attacks. Thus, the invention concerns the capacity to generate software protected against both static and dynamic analysis.

The present invention is defined, in its broadest sense, as a method to generate a code to be stored in a memory in order to be later executed by a microprocessor, comprising the steps of:
- generating initial operation code (opcode) in abstract assembly language;
- interpreting each abstract assembly opcode using at least two different virtual machine engines logics, producing disjoined sequences of target assembly opcodes, each sequence implementing the corresponding virtual machine logic needed to interpret one assembly opcode;
- randomly choosing one of the at least two sequences of target assembly opcodes for each initial opcode;
- merging extremities of chosen sequences of target assembly opcodes in compliance with opcode boundaries within each interpreted target assembly opcode and with data flow,
- storing the resulting code for subsequent execution.

This invention proposes to add a new protection layer against attacks, in order to make it harder for attackers to reverse the code, even by capturing the assembly execution trace. Therefore, the method according to the present invention allows reducing the risks of malicious attacks. At least, the attacks are more complex to carry out for a malicious attacker. The invention indeed enhances the security of the generated code, anticipating future publications explaining how to reverse obfuscated code by crunching the execution assembly trace.

The overall principle of the invention is to make "as if" there were two virtual machine engines interpreting opcodes. Initial VM opcodes are thus initially produced as if each abstract opcode had to be run later by a Virtual Machine engine.

Then the two virtual machines produce blocks of real assembly code, thus as seen in virtual machine execution trace, for each opcode side by side, but with disjoined logics. Then the invention uses a flip-flop switch to randomly choose one of the two sequences or, more generally formulated, a random selection of one sequence among the available ones. More than two sequences and thus more than two virtual machines can be used according to the principles of the invention. The random selection is combined with a random merger in order to mix the blocks at assembly level. At last the obtained assembly code back is packed into the final application as if it was standard code, and neither VM opcode nor a VM logic remains. It is advantageously stored as a .exe to be later loaded as such and executed.

Of course, this protection must be combined with other existing classes of obfuscation techniques: strings encryption, etc.

As a particular feature, code generation logics of the different virtual machines do not use the same patterns and the same registers.

This feature defines the differences as generally recognized between two virtual machines having different logics.

In a particular embodiment, the step of randomly choosing one of the at least two sequences of target assembly opcodes for each initial opcode is done for sets of contiguous initial opcodes.

In this embodiment, sets of opcodes are processed together while a virtual machine sequence is chosen. A same VM logic thus applies to each initial opcode of the set of contiguous initial opcodes. Sizes of the opcodes' sets can be fixed, for example blocks of five VM opcodes processed together all along the generation of the code according to the invention, or can vary regularly or randomly during the generation of the code according to the invention.

According to a preferred embodiment, the merging step is randomly performed.

In this embodiment, instructions as found at extremities of each block of real assembly code are randomly mixed from one virtual machine or from the other. The overlap decision when it is switched from one VM logic to another VM logic is not deterministic. It renders any fix pattern research even more difficult.

The invention also relates to a code as obtained by implementing the method of the invention.

Such a code has a specific structure due to the random alternance of two VM logics all along the stored final static code.

It also relates to a computer readable media storing a code according to the invention for the code to be executed by a microprocessor.

To the accomplishment of the foregoing and related ends, one or more embodiments comprise the features hereinafter fully described and particularly pointed out in the claims.

### BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.
- Figure 1 schematically shows initial opcodes and generation of interpreted opcode using two different virtual machine logics;
- Figure 2 schematically shows the random selection of one of the sequences for each initial opcode;
- Figure 3 schematically shows the presence of cores and boundaries within each piece of interpreted opcode and
- Figure 4 schematically shows the software as obtained once the merging step performed.

### DETAILED DESCRIPTION OF EMBODIMENTS OF THE INVENTION

The abstract pseudo-code logic of the protection according to the invention is explained in the following drawings. The detailed description will illustrate and describe what is considered as a preferred embodiment of the invention. It should of course be understood that various modifications and changes in form or detail could readily be made without departing from the spirit of the invention. It is therefore intended that the invention may not be limited to the exact form and detail shown and described herein, nor to anything less than the whole of the invention disclosed herein and as claimed hereinafter. Further the features described in the description, the drawing and the claims disclosing the invention may be essential for the invention considered alone or in combination. In particular, any reference signs in the claims shall not be construed as limiting the scope of the invention. The wording "comprising" does not exclude other elements or steps. The wording "a" or "an" does exclude a plurality. The same elements have been designated with the same reference numerals in the different drawings. For clarity, only those elements and steps which are useful to the understanding of the present invention have been shown in the drawings and will be described.

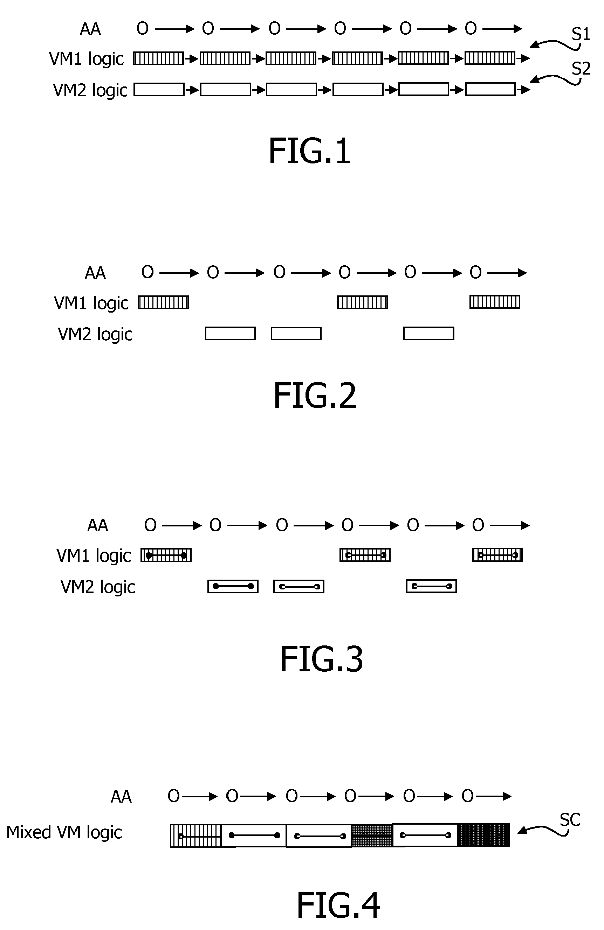

Figure 1 schematically shows the first steps of the invention. On the first line of figure 1, the successive opcodes O as generated in abstract assembly language AA, and so as if they were dedicated to be interpreted by a virtual machine. On the second line is shown the result of the interpretation step by a first virtual machine VM1 having its own logic applied on the successive opcodes as shown on the fist line. It consists in several successive blocks of instructions in interpreted language. The third line shows the result of the interpretation of the successive opcodes by another different virtual machine. Different successive blocks of instructions having disjoined logics are thus obtained. More than two such lines of blocks of instructions could be obtained in the case more than two virtual machines would be applied.

Figure 2 schematically shows the random selection of one of the sequences for each initial opcode by presenting the effect of a flip flop switcher on the two lines of interpreted languages as shown on figure 1. It is here noted that a one opcode giving one block of instruction basis is here applied but sets of N to M contiguous opcodes could be gathered to give one block of instructions, N and M being various small size integers and at least of a size one scale inferior to the total number of processed opcodes.

The software development kit thus produces assembly by combining the two logics as shown on figure 1. The software development kit has further boundaries for "data available" or "data required". It corresponds to...

Before and after the core code which has to be maintained as such, code can be randomly merged provided that the data flow is preserved. The core code is schematically shown on figure 3 by a line between two points inside each block of instructions generated according to the virtual machine logic.

When a function is processed by a virtual machine engine, a pattern is used. To have disjoined virtual machine, the patterns have to be different. Those patterns generate kinds of dead ends at the beginning and at the end of the blocks of real assembly instructions. Those dead ends are not relevant for the execution of the instructions really performing the operation as requested in the interpreted opcode and thus defining a core of the block. When virtual machines having disjoined logic are used, those cores use different registers depending on which virtual machine they were generated by.

Each virtual machine engine thus provides, for one opcode, a core of instructions and extremities not relevant for the operation corresponding to the opcode to be executed. The invention exploits these properties of the blocks of real assembly instructions. Extremities are merged without incidence on the execution of the operations as initially coded in the opcode.

Figure 4 schematically shows the software SC as obtained once the merging step performed. The flattened resulting code SC is thus an expanded virtual machine code. It requires virtual machine logic to be reversed and indeed at least two virtual machine logics to be reversed. This is obtained although there is no static virtual machine engine to study. Even if the code SC can be disassembled using standard tools, it produces very long blocks of raw assembly, without assembly for disassembling opcodes. Scrambled opcodes with different logics make it harder for detecting macro blocks and creation a specific disassembler. Classical attack on virtual machine execution trace by tracing the beginnings of each virtual machine patterns as applied for each interpreted opcode is no more possible. The overlapping of the extremities of each block of real assembly instructions enables to render very difficult the detection of any beginning of a virtual machine pattern. Reversing the obtained code SC is thus rendered very difficult as an attacker cannot easily at all detect these beginning and further have to cope with disjoined logics at each of the blocks. The use of two virtual machine logic already enables a strongly enhanced security of the code SC and the use of more than two virtual machine logics would even strengthen the protection.

With the invention, the access to virtual machine logics is thus very difficult, because the actual VM main loops do not exist anymore, thus preventing an attacker to reverse them. No factorization is thus accessible as diversification is very strong. Everything is necessary in the obtained code.

A secure software development kit is thus obtained able to resist to any dynamic reverse toolchain for attacking protected execution assembly trace.

In the above detailed description, reference is made to the accompanying drawings that show, by way of illustration, specific embodiments in which the invention may be practiced. These embodiments are described in sufficient detail to enable those skilled in the art to practice the invention. It is to be understood that the various embodiments of the invention, although different, are not necessarily mutually exclusive. For example, a particular feature, structure, or characteristic described herein in connection with one embodiment may be implemented within other embodiments without departing from the spirit and scope of the invention. In addition, it is to be understood that the location or arrangement of individual elements within each disclosed embodiment may be modified without departing from the spirit and scope of the invention. The above detailed description is, therefore, not to be taken in a limiting sense, and the scope of the present invention is defined only by the appended claims, appropriately interpreted, along with the full range of equivalents to which the claims are entitled.

## Claims

1. Method to generate a code (SC) to be stored in a memory in order to be later executed by a microprocessor, comprising the steps of:
- generating initial operation codes (opcodes) in abstract assembly language (AA);
- interpreting each abstract assembly opcode (O) using at least two different virtual machine engines (VM1, VM2) logics, producing disjoined sequences (S1, S2) of target assembly opcodes, each sequence (S1, S2) implementing the corresponding virtual machine logic needed to interpret one assembly opcode (O);
- randomly choosing one of the at least two sequences (S1, S2) of target assembly opcodes for each initial opcode (O);
- merging extremities of chosen sequences of target assembly opcodes in compliance with opcode boundaries within each interpreted target assembly opcode and with data flow,
- storing the resulting code (SC) for subsequent execution.

2. Method according to claim 1, wherein code generation logics of the different virtual machines (VM1, VM2) do not use the same patterns and the same registers.

3. Method according to claim 1, wherein the step of randomly choosing one of the at least two sequences (S1, S2) of target assembly opcodes for each initial opcode is done for sets of contiguous initial opcodes (O).

4. Method according to claim 1, wherein the merging step is randomly performed.

5. Code (SC) as obtained by implementing the method of one of claims 1 to 3.

6. Computer readable media storing a code (SC) according to claim 4 for the code (SC) to be executed by a microprocessor.
